(19) Europäisches Patentamt
European Patent Office
Office européen des brevets

(11) EP 1 995 807 A1

(12) EUROPEAN PATENT APPLICATION
published in accordance with Art. 158(3) EPC

(43) Date of publication:
26.11.2008 Bulletin 2008/48

(51) Int Cl.:
H01M 8/02 (2006.01)          H01B 1/06 (2006.01)
H01M 8/10 (2006.01)

(21) Application number: 07738449.3

(22) Date of filing: 13.03.2007

(86) International application number:
PCT/JP2007/054977

(87) International publication number:
WO 2007/119344 (25.10.2007 Gazette 2007/43)

(84) Designated Contracting States:
DE FR GB

(30) Priority: 14.03.2006 JP 2006069826

(71) Applicant: Tokuyama Corporation
Shunan-shi, Yamaguchi 745-8648 (JP)

(72) Inventors:
• ISOMURA, Takenori
Shunan-shi, Yamaguchi 745-8648 (JP)

• FUKUTA, Kenji
Shunan-shi, Yamaguchi 745-8648 (JP)

(74) Representative: Ziebig, Marlene et al
Gulde Hengelhaupt Ziebig & Schneider
Patentanwälte Rechtsanwälte
Wallstrasse 58/59
10179 Berlin (DE)

(54) SEPARATION MEMBRANE FOR DIRECT LIQUID FUEL CELL

(57) The present invention provides a membrane for direct liquid fuel cell, composed of a cation exchange membrane having a water content of 1 to 5% at a relative humidity of 20% RH (25°C), a water content of 5 to 15% at a relative humidity of 80% RH (25°C) and a water content of 20 to 40% at a relative humidity of 100% RH (25°C). The membrane is suitable as a membrane for fuel cell in which the air is taken in and is supplied into an oxidant chamber with no substantial humidity control, is high in non-permeability of liquid fuel, and has good proton conductivity.

Fig. 1

**Description**

[Technical Field]

The present invention relates to a direct liquid fuel cell and a membrane used therein. More particularly, the present invention relates to a direct liquid fuel cell of type in which the air is taken in and supplied into an oxidant chamber with no substantial humidity control, as well as to a membrane which can be suitably used in the fuel cell.

[Background Art]

Ion exchange membranes are in wide use as a membrane for cell (e.g. solid polymer fuel cell, redox flow cell or zinc-bromine cell), a membrane for dialysis, etc. Of these, solid polymer fuel cell which uses an ion exchange membrane as an electrolyte, is an electricity generation system in which a fuel and an oxidant are supplied into a cell continuously, they are reacted, and the resulting chemical energy is taken out as an electric power; and it is one of electricity generation systems which are clean and highly efficient. In recent years, the solid polymer fuel cell has increased its importance for uses in automobile, household and portable device because it can be operated at low temperatures and can be produced in a small size.

Generally the solid polymer fuel cell has inside a solid polymer membrane which functions as an electrolyte, and the solid polymer membrane has, at each side, a bonded gas diffusion electrode having a catalyst loaded thereon. This cell works as a fuel cell when a fuel composed of hydrogen gas or an aqueous alcohol (e.g. methanol) solution is fed into a chamber (fuel chamber) in which one of the gas diffusion electrodes is present, an oxygen-containing gas as an oxidant (e.g. oxygen or air) is fed into a chamber in which the other gas diffusion electrode is present, and an external circuit is connected to the two gas diffusion electrodes. Of fuel cells, direct liquid fuel cell which uses an aqueous alcohol (e.g. methanol) solution itself as fuel, is easy to handle because the fuel is a liquid. Further, this fuel cell uses a fuel of low cost. Therefore, the direct liquid fuel cell is expected as an electric source of relatively small output used especially in portable devices.

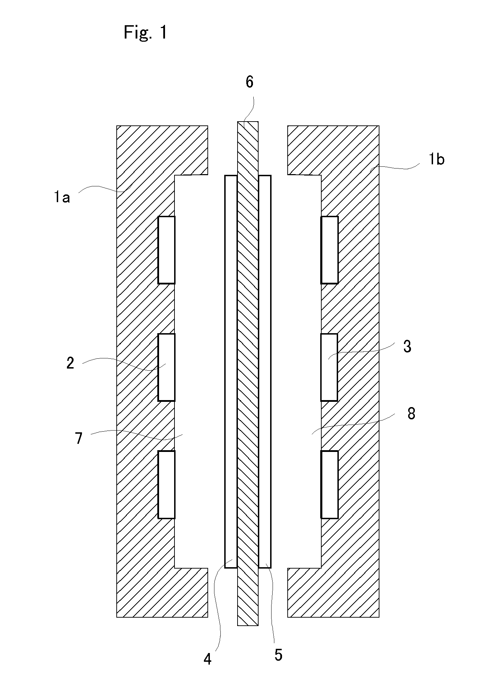

The fundamental structure of direct liquid fuel cell is shown in Fig. 1. In Fig. 1, 1a and 1b are each a partition wall of cell. The cell partition walls 1a and 1b are formed at the both sides of a solid polymer electrolyte membrane 6 used as a membrane so as to sandwich the solid polymer electrolyte membrane 6. 2 is a fuel passage formed in the inner wall of one cell partition wall 1a. 3 is an oxidant gas passage formed in the inner wall of other cell partition wall 1b. 4 is a diffusion electrode of fuel chamber side. 5 is a gas diffusion electrode of oxidant chamber side.

In this direct liquid fuel cell, when a liquid fuel such as alcohol or the like is supplied into a fuel chamber 7, proton (hydrogen ion) and electron are generated from the liquid fuel by the catalysis possessed on the fuel chamber side diffusion electrode 4. The generated proton passes through the inside of solid polymer electrolyte membrane 6 and reaches an oxidant chamber 8, where the proton reacts with oxygen gas or with the oxygen in air to generate water. The electron generated at the fuel chamber side diffusion electrode 4 passes through an external circuit (not shown) and is sent to the oxidant chamber side gas diffusion electrode 5. At this time, the external circuit is supplied with an electric energy.

In the direct liquid fuel cell having the above-mentioned structure, there is ordinarily used a cation exchange membrane as the above-mentioned membrane. The cation exchange membrane is required to have properties of small electric resistance, high physical strength and low permeability of alcohol or the like used as a fuel. For example, when the membrane has a high permeability of alcohol, the alcohol in the fuel chamber diffuses into the oxidant chamber side, resulting in a reduced cell output.

As the cation exchange membrane used as a membrane for fuel cell, there has been known, for example, one in which a porous membrane made of a polyolefin resin or a fluoroplastic is used as a base material. This cation exchange membrane is produced by a method which comprises filling, in the pores of the base material, a polymerizable composition composed of a polymerizable monomer having a functional group into which a cation exchange group can be introduced and a crosslinkable polymerizable monomer, polymerizing the polymerizable composition, and introducing a cation exchange group into the functional group into which a cation exchange group can be introduced. The resulting membrane composed of a crosslinked polymer having a cation exchange group can be produced at a relatively low cost, is small in electric resistance, is low in permeability of liquid fuel, and is low in swelling and deformation caused by the fuel; therefore, the membrane is preferred (for example, Patent Literatures 1 and 2).

In the direct liquid fuel cell, pure oxygen is used as an oxygen-containing gas (an oxidant gas), in some cases. However, it is ordinarily a main stream to take in the air present in the vicinity of the cell and use it, for the reasons of easiness, convenience, etc.

The electricity generation ability of fuel cell is delicately influenced by the changes of the temperature and humidity of the air taken in, the feeding pressure of the air, etc. Therefore, in order to continue stable electricity generation, it is preferred to stably maintain the above conditions of the air taken in. In direct liquid fuel cells for which a high output is required, such as small-size electric generator used outdoor, it has been conducted in many cases to heat and humidify the air taken in, by an appropriate means and pressurize the air using a pump or the like to control the air at the intended levels of temperature, humidity and pressure, and then supply the resulting air into a fuel cell (for example, Non-Patent Literature 1).

Meanwhile, in applications such as electric source for portable devices (e.g. mobile phone), a high output is important. Further, smallness in volume, mass, etc. of cell is very important for transferability. In the direct liquid fuel cell in which such transferability is important, provision of auxiliary equipment for enabling the humidification and heating of air should preferably be avoided because it invites an increase in the mass, volume, etc. of cell. Therefore, in the case of transferable cell, the influences of the change factors of the air taken in, on the electricity generation ability of the cell are acceptable in many cases, and the air taken in is supplied as is directly into the oxidant chamber. Also, with respect to the supply of air or the like, no pressurization equipment is used ordinarily and the air surrounding the cell is supplied into the cell by utilizing the natural diffusion of air as a driving force.

Patent Literature 1:      JP 2001-135328 A
Patent Literature 2:      JP 1999-310649 A
Non-Patent Literature 1:  The society of Chemical Engineers, Japan; Kagakukougaku Ronbunshuu, Vol. 31, No. 1, pp. 62 to 67, 2005

[Disclosure of the Invention]

[Problem to Be Solved by the Invention]

The study by the present inventors revealed that, when a direct liquid fuel cell of type in which the air is taken in and is supplied as is into an oxidant chamber, was used in its ordinary use condition, the changes of temperature and pressure, of the change factors of the taken-in air did not so greatly influence on the electricity generation ability of the cell and the influences were acceptable. However, the change of humidity influenced greatly on the permeability of liquid fuel through the cation exchange membrane. In view of the practical usability of fuel cell, it is desired to develop a fuel cell which can withstand to the change of humidity. The present inventors estimated the mechanism of the influence of humidity on permeability of liquid fuel, as follows.

That is, in a fuel cell of Fig. 1, the surface and its vicinity of the fuel chamber 7 side of the membrane 6 composed of a cation exchange membrane, is in contact with a liquid fuel containing a large amount of water, such as aqueous alcohol solution and therefore is in a wet state. Meanwhile, the surface and its vicinity of the oxidant chamber 8 side is in contact with the air taken in and therefore is in a dry state. Thus, in the cell membrane 6 contacting with completely different environments at the two surfaces, the relatively wet surface and its vicinity of the fuel chamber 7 side is high in proton conductivity and allows easy permeation of liquid fuel. The relatively dry surface and its vicinity of the oxidant chamber 8 side is low in proton conductivity and allows no easy permeation of liquid fuel. The liquid fuel permeability of the whole membrane is considered to be a combination of the different properties of the two surfaces and their vicinities. Therefore, with respect to the non-permeability of liquid fuel in the membrane (cation exchange membrane) of direct liquid fuel cell, it is important to maintain the non-permeability at a high level in the dry surface and its vicinity of oxidant chamber 8 side and suppress the flow of a large amount of liquid fuel which permeates through the membrane from its wet surface of fuel chamber 7 side.

It is known that cation exchange membrane of crosslinked structure is relatively high in non-permeability of liquid fuel, and its non-permeability of liquid fuel in dry state is considerably good. Therefore, a fuel cell using this membrane shows good electricity generation ability when the air as an oxidant is supplied thereinto in a sufficiently dry state with its humidity controlled.

However, when the humidity of taken-in air is high as experienced in rainy days or in use of fuel cell near a water source and when such an air of high humidity is supplied into the above fuel cell with no humidity control, the surface and its vicinity of oxidant chamber 8 side of membrane becomes relatively wet. The present inventors confirmed that, in such a case, the water content at the surface of membrane increases, resulting in a large reduction in non-permeability of liquid fuel.

The relative humidity in the air changes greatly depending upon the environmental changes such as weather and the like. The relative humidity of the air changes ordinarily in a wide range of about 20 to 80%. Correspondingly to this wide-range change of relative humidity, the non-permeability of membrane of liquid fuel changes greatly as mentioned above. This change is not acceptable at all from the standpoint of securing stable cell output.

In order to make small the change, it is effective to increase the degree of covalent bonded crosslinking of membrane and allow the membrane to have a structure of low water absorbability. However, with an excessively high crosslinking degree, the absorption of water in liquid fuel becomes insufficient at the surface and its vicinity of fuel chamber side of membrane which is contacting with the liquid fuel. As a result, the wetness at the membrane surface at fuel chamber side becomes insufficient, resulting in a large reduction in proton conductivity of membrane. Therefore, it is substantially impossible to enhance the non-permeability of liquid fuel and yet maintain the proton conductivity of membrane at a practical level, by controlling the crosslinking degree alone.

In view of the above background, it is a big task to develop a membrane for direct liquid fuel cell of type in which the air is taken in and supplied into an oxidant chamber with no substantial humidity control, which membrane is superior in non-permeability of liquid fuel when the humidity of taken-in air is low, can maintain a high non-permeability of liquid fuel even when the humidity is high, and further is good in proton conductivity.

[Means for Achieving the Problem]

The present inventors made a study in order to solve the above problem. As a result, the present inventors found the following. That is, in a direct liquid fuel cell in which the air of certain humidity is taken in directly and electricity generation is conducted, the water content at the surface and its vicinity of oxidant chamber side of membrane changes correspondingly to the change of the humidity of the air taken in. However, the water content of the membrane surface of oxidant chamber side is maintained low. In this state, the non-permeability of liquid fuel in membrane is almost regulated by the low water content at the membrane surface of oxidant chamber side.

The present inventors further found the following. The membrane surface of fuel chamber side is in contact with a liquid fuel containing a large amount of water. Therefore, the membrane surface of fuel chamber side is maintained at a high water content. The proton conductivity of membrane is hardly influenced by the humidity of the air taken in and is regulated by the level of the water content at the membrane surface of fuel chamber side.

Based on the above findings, the present inventors thought that the above-mentioned problem can be solved by using, in a fuel cell, a membrane whose water content is kept low in the humidity range of the air supplied into the oxidant chamber of the fuel cell and is sufficiently high when the membrane is in contact with a large amount of liquid fuel (water) supplied into the fuel chamber of the fuel cell and, with such a membrane, a fuel cell can be provided, which is capable of exhibiting an excellent electricity generation ability stably. The present invention has been completed based on the above thought.

That is, the present invention lies in a membrane for direct liquid fuel cell of type in which the air is taken in and supplied into an oxidant chamber with no substantial humidity control, which membrane is characterized by being composed of a cation exchange membrane having a water content of 1 to 5% at a relative humidity of 20% RH (25˚C), a water content of 5 to 15% at a relative humidity of 80% RH (25˚C) and a water content of 20 to 40% at a relative humidity of 100% RH (25˚C).

The present invention also lies in a direct liquid fuel cell produced using the above-mentioned, novel membrane for fuel cell.

[Effects of the Invention]

The cation exchange membrane used in the present invention, when used as a membrane for direct liquid fuel cell of type in which the air is taken in and supplied into an oxidant chamber with no substantial humidity control, is highly superior in non-permeability of liquid fuel when the humidity of taken-in air is low. Even when the humidity of taken-in air is high, the non-permeability of liquid fuel can still be maintained high. In general, the humidity of the air changes in a range of about 20 to 80%. In this humidity range, the permeability of methanol through the membrane contacting with a 30% methanol solution can be maintained at 600 g/m$^2$·hr or lower, particularly at 400 to 100 g/m$^2$·hr, at 25˚C, for example.

Also, the membrane of the present invention is good in proton conductivity.

Therefore, the fuel cell produced using the membrane of the present invention is low in internal resistance, undergoes no big influence in electricity generation ability even when the humidity of the air changes in the use environment of cell, can keep stably and low the crossover of liquid fuel (e.g. alcohol), and is extremely useful in practical use.

[Brief Explanation of the Drawings]

Fig. 1 is a conceptual drawing showing the fundamental structure of direct liquid fuel cell.

Fig. 2 is a graph showing the relationships between relative humidity and water content, obtained with a cation exchange membrane of the present invention (solid line and ○) used in Example 1 as a membrane for fuel cell and cation exchange membranes used in Comparative Examples 1 and 2 each as a membrane for fuel cell (Comparative Example 1: dotted line and □, Comparative Example 2: dot-bar line and x).

[Explanation of Symbols]

1a and 1b are each a cell partition wall; 2 is a fuel passage; 3 is an oxidant gas passage; 4 is a diffusion electrode at fuel chamber side; 5 is a gas diffusion electrode at oxidant chamber side; 6 is a solid polymer electrolyte (a cation exchange membrane); 7 is a fuel chamber; and 8 is an oxidant chamber.

[Best Mode for Carrying Out the Invention]

(Membrane for Direct Liquid Fuel Cell)

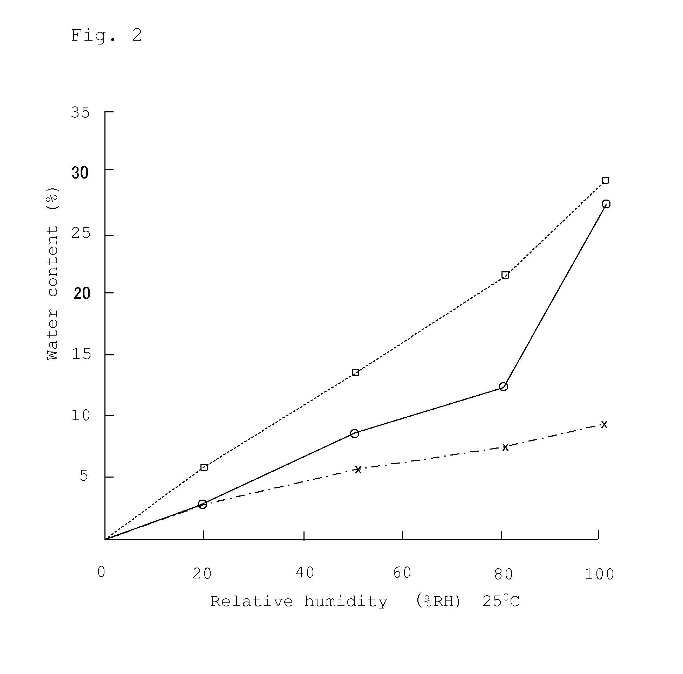

The membrane for direct liquid fuel cell, of the present invention is constituted by a cation exchange membrane. The membrane has respective water contents each of particular ranges in atmospheres of relative humidity of 20% RH (25˚C), relative humidity of 80% RH (25˚C) and relative humidity of 100% RH (25˚C) and is equilibrated between the relative humidity of atmosphere and the water content of membrane. Fig. 2 shows a relationship between the relative humidity of atmosphere and the water content of membrane which is in equilibrium therewith, of a representative membrane of the present invention.

As shown in the solid line (the cation exchange membrane of example 1 described later) of Fig. 2, the membrane of the present invention has a water content of 1 to 5% at a relative humidity of 20% RH (25˚C). Therefore, in a direct liquid fuel cell using this membrane, the surface and its vicinity of the oxidant chamber side of the membrane has a water content of the above level (1 to 5%) when the air taken into the oxidant chamber is in a dry state (the relative humidity of the air is around 20% RH). As mentioned previously, the permeability of liquid fuel through a membrane of low water content is extremely small; therefore, a membrane having a portion of small water content exhibits an excellent non-permeability of liquid fuel.

The membrane of the present invention maintains a low water content of 5 to 15% in an atmosphere having a relative humidity of 80% RH (25˚C). Therefore, even when the relative humidity of the air taken into the oxidant chamber has increased to the above level, the non-permeability of liquid fuel through membrane deteriorates only slightly and an excellent non-permeability of liquid fuel is still maintained.

Meanwhile, as shown in the dotted line (the cation exchange membrane of Comparative Example 1 described later) of Fig. 2, a conventional cation exchange membrane having a crosslinked structure has a water content which is low and close to the level specified by the present invention, in a dry environment of relative humidity of 20% RH (25˚C). However, when the relative humidity of the atmosphere increases to 80% RH (25˚C), the water content rises rapidly and exceeds 20%. This level is far above the water content range specified by the present invention. Under such a situation, the non-permeability of liquid fuel through membrane deteriorates strikingly.

When, in order to suppress the increase in water content of membrane, which is accompanied by the increase of relative humidity of atmosphere, the crosslinking degree of membrane is increased, the water content of membrane in an atmosphere of relative humidity of 100% RH (25˚C) is less than 10% and small, as shown by the dot-bar line (the cation exchange membrane of Comparative Example 2 described later) of Fig. 2. When such a membrane is used in a fuel cell, the water content of the membrane is low at the membrane surface and its vicinity of fuel chamber side, which is contacting with a liquid fuel, as described later. As a result, it is impossible to allow the membrane to have a sufficiently high proton conductivity as a whole.

The membrane of the present invention has a water content of 20 to 40% in an atmosphere having a relative humidity of 100% RH (25˚C). Therefore, when the membrane has been incorporated in a fuel cell, the water content is about the above level and large at the membrane surface and its vicinity of fuel chamber side, which are contacting with a liquid fuel. The proton conductivity in the membrane of large water content is high. Therefore, the membrane of the present invention has good proton conductivity as a whole. That is, the present membrane is low in electric resistance.

For more striking exhibition of the above function, it is preferred that the membrane of the present invention has a water content of 1 to 4% at a relative humidity of 20% RH (25˚C), a water content of 7 to 13% at a relative humidity of 80% RH (25˚C) and a water content of 21 to 35% at a relative humidity of 100% RH (25˚C).

The membrane (cation exchange membrane) having the above property is preferably a membrane produced from a hydrocarbon-based cation exchange resin. Here, the hydrocarbon-based cation exchange resin refers to a resin which has a structure composed mainly of carbon and hydrogen, at a portion other than ion exchange group. Incidentally, the portion other than ion exchange group may contain a small amount of other atoms such as fluorine, chlorine, bromine, oxygen, nitrogen, silicon, sulfur, boron, phosphorus and the like; however, the amount thereof is preferably 40 mol % or less, particularly preferably 10 mol % or less relative to the total atoms constituting the portion other than ion exchange group.

The hydrocarbon-based cation exchange membrane is preferably a crosslinked polymer having a certain amount of covalent bonded crosslink, i.e. a resin having a certain amount of covalent bonded (e.g. carbon-carbon bond or carbon- oxygen bond) crosslinking site. Since, in general, non-crosslinked polymers or polymers having ionic bonded crosslink alone tend to swell in methanol or water and, in an extreme case, dissolve therein, the hydrocarbon-based cation exchange membrane preferably has covalent bonded crosslink in such an extent that the above-mentioned problems can be avoided. Also, the covalent bonded crosslink, as is apparent from various methods (described later) for production of the cation exchange membrane of the present invention, can become an important factor in order to allow a cation exchange resin to satisfy the water content requirement specified by the present invention. In general, a higher crosslink density which is brought about by covalent bond tends to result in a lower water content of membrane in a low humidity atmosphere and the permeability of liquid fuel decreases; meanwhile, a lower crosslink density tends to result in a higher water content in a high humidity range and a low resistance becomes possible.

As the cation exchange group bonded to the cation exchange membrane constituting the membrane of the present invention having the above-mentioned properties, there can be mentioned sulfonic group, carboxyl group, phosphonic group, etc. Of these cation exchange groups, sulfonic group, which is a strongly acidic group, is preferred, for example, from a standpoint that the membrane obtained can have a low electric resistance.

The cation exchange capacity of the membrane is ordinarily preferred to be 0.1 to 3.0 mmol/g and is more preferred to be 0.4 to 1.5 mmol/g when measured by a given method, from standpoints of securing sufficient proton conductivity and, when the cation exchange capacity is too high, of preventing the increase in water content of membrane in atmosphere of low relative humidity.

The electric resistance is ordinarily preferred to be 0.25 $\Omega \cdot cm^2$ or less and is more preferred to be 0.20 $\Omega \cdot cm^2$ or less when expressed by an electric resistance measured by the AC impedance method at 40°C in a wet state.

As to the thickness of the membrane, there is no particular restriction; however, the thickness is ordinarily preferred to be 10 to 120 $\mu$m and is more preferred to be 10 to 70 $\mu$m.

(Basic Concept of Membrane Production)

The cation exchange membrane constituting the membrane of the present invention having the above-mentioned unique property regarding the water content may be produced by any known method.

As to the structure of the membrane, there is no particular restriction. It may a structure obtained by forming a cation exchange membrane in a film shape. There is no particular restriction, either, as to the method of forming a cation exchange resin in a film shape. As a membrane having a particularly preferred structure, there is a membrane obtained by using a porous membrane as a base material and dispersing and filling a cation exchange resin in the pores of the porous membrane. In the membrane for fuel cell, obtained by using a porous membrane as a base material, the porous membrane functions as a reinforcing material; therefore, the membrane for fuel cell can have a high mechanical strength with no increase in electric resistance. For this reason, the structure of membrane in which a porous membrane is used as a base material, is a membrane structure preferably usable in the present invention.

In producing the membrane having the above-mentioned properties, any of conventional production methods of membrane can be applied with no restriction. In this case, in order to allow the obtained membrane to exhibit the above-mentioned properties of the present membrane, it is necessary to consider the special differences of the present invention not employed in conventional membranes.

(First Production Method of Membrane)

Below is described a method for preferably producing the membrane of the present invention by utilizing a conventional method for production of membrane.

This production method is a method for producing the above-mentioned, crosslinked type hydrocarbon-based cation exchange membrane.

At first, there is prepared a polymerizable composition comprising a polymerizable monomer having a functional group suitable for introduction of cation exchange group in later step or a cation exchange group-containing, polymerizable monomer, a crosslinkable polymerizable monomer, and an effective amount of a polymerization initiator. Then, this polymerizable composition is contacted with a porous membrane to fill the polymerizable composition in the pores of the porous membrane, followed by polymerization of the polymerizable composition to obtain a resin. Thereafter, a cation exchange group is introduced into the resin, as necessary.

In the above production method, in order to achieve the moisture property possessed by the membrane of the present invention, for example, the amount of cation exchange group introduced and the amount of crosslinkable polymerizable monomer used are allowed to be a combination of particular narrow ranges.

In the conventional method for production of membrane, there is used, in a polymerizable composition, about 5 to 20 mols of a crosslinkable polymerizable monomer relative to 100 mols of a polymerizable monomer having a functional group suitable for introduction of cation exchange group or a cation exchange group-containing, polymerizable monomer. In this conventional method for production of membrane, the water content at a relative humidity of 80% RH (25°C), of the obtained membrane is far above the water content specified by the present invention, as mentioned above. When the use amount of the crosslinkable polymerizable monomer is increased from the above-mentioned amount, for higher crosslinking degree, the water content at a relative humidity of 100% RH (25°C), of the obtained membrane is far smaller than the water content specified by the present invention. Thus, it is impossible to produce the membrane of the present invention according to the conventional formulation.

Meanwhile, in the first method for production of the membrane of the present invention, the use amount of, for example, the crosslinkable polymerizable monomer is made smaller than in the conventional method. Specifically explaining, the use amount of the crosslinkable polymerizable monomer is reduced to 0.1 to 1 mol relative to 100 mols of the polymerizable monomer having a functional group suitable for introduction of cation exchange group or the cation exchange group-containing, polymerizable monomer. Further, there is together used other copolymerizable component, i.e. a polymerizable monomer which contains no cation exchange group and into which introduction of cation exchange group is difficult, in a particular amount (in general, 600 to 900 mols relative to 100 mols of the polymerizable monomer having a functional group suitable for introduction of cation exchange group or the cation exchange group-containing, polymerizable monomer). Thus, by, for example, making relatively small (specifically, 0.1 to 0.3 mmol/g) the cation exchange capacity of the cation exchange membrane obtained, there can be produced a cation exchange membrane having the above-mentioned unique property regarding the water content.

A typical example of the membrane produced by the above method is a cation exchange membrane in which a crosslinked cation exchange resin membrane obtained by random copolymerization, composed of 100 mols of a cation exchange group-containing, polymerizable monomer unit, 0.1 to 1 mol of a crosslinkable polymerizable monomer unit and 600 to 900 mols of a cation exchange group-free polymerizable monomer unit is filled in the pores of a porous membrane, and the cation exchange membrane has a cation exchange capacity of 0.1 to 0.3 mmol/g.

In the cation exchange membrane of the present invention produced by the first production method of membrane, firstly, since the amount of cation exchange group introduced is small, the amount of bound water contained by being accompanied by the cation exchange group is very small. Consequently, the water content of the membrane is kept low not only in a dry environment of relative humidity of 20% RH (25°C) but also in a relative humidity of 80%. Secondly, being low in crosslinking degree, the cation exchange membrane absorbs free water in a large amount and swells in a wet state of relative humidity of 100% RH (25°C), resulting in a high water content.

Here, the free water refers to a water which has a weak interaction with the cation exchange group of membrane and is easily vaporized. The bound water refers to a water which has a very strong interaction with the cation exchange group of membrane and is hardly vaporized out of the membrane.

Thus, in the cation exchange membrane of the present invention, the cation exchange group introduced in a particular amount range and the crosslinkable polymerizable monomer used in a particular amount range act on each other; as a result, a membrane of the present invention showing unique water contents is obtained.

As specific examples of the polymerizable monomer which contains no cation exchange group and to which introduction of cation exchange group is difficult, used in the above method for production of the present membrane, there can be mentioned vinylcycloalkanes such as vinylcyclopentane, vinylcyclohexane and the like; octachlorostyrene; hexafluoropropylene; vinyltrimethylsilane; and vinyltrichlorosilane.

Specific examples of the polymerizable monomer having a functional group suitable for introduction of cation exchange group, the cation exchange group-containing, polymerizable monomer and the crosslinkable polymerizable monomer may be selected from known monomers used in the production method of hydrocarbon-based crosslinked cation exchange membrane. Specifically explaining, they may be selected from the monomers described in JP 2001-135328 A, JP 2005-005171 A, etc. The same is mentioned for the polymerization initiator and porous base material used, the in-depth production conditions other than mentioned above, etc.

(Second Production Method of Membrane)

This production method enables production of a membrane which contains a sufficient amount of an introduced cation exchange group, has a high cation exchange capacity, and is superior in chemical stability and durability.

At first, there is prepared a polymerizable composition comprising polymerizable monomer components composed of 100 mols of a polymerizable monomer having an aromatic hydrocarbon group suitable for introduction of cation exchange group, 10 to 99 mols of a polymerizable monomer having an anion exchange group containing primary to tertiary nitrogen atoms, and 5 to 22 mols of a crosslinkable polymerizable monomer, and a polymerization initiator.

Then, the polymerizable composition is contacted with a porous membrane having an average pore diameter of 0.02 to 0.5 μm and a porosity of 30 to 70%, to infiltrate the polymerizable composition into the pores of the porous membrane.

Thereafter, the infiltrated polymerizable composition is polymerized and cured to obtain a cured resin material.

Lastly, a cation exchange group is introduced into the aromatic hydrocarbon group of the cured resin material.

In the reaction for introducing a cation exchange group into the aromatic hydrocarbon group, the cation exchange group can be introduced into the aromatic hydrocarbon group almost quantitatively. The cation exchange resin constituting a cation exchange membrane, produced by this method has a cation exchange group which shows cation exchange ability in an aqueous solution, and an anion exchange group containing primary to tertiary nitrogen atoms, which shows anion exchange ability. In this cation exchange resin, the amount of cation exchange group is larger than the amount of anion exchange group; therefore, the cation exchange resin behaves as a cation exchange resin, as a whole. In this cation exchange resin, part of the cation exchange group makes ionic bond with part of the anion exchange group containing primary to tertiary nitrogen atoms, to form an ionic complex. With respect to the amount of ionic complex formed, ordinarily, 4 to 80 mol % of the cation exchange group forms an ionic complex with the anion exchange group containing primary to tertiary nitrogen atoms.

In the present membrane composed of the cation exchange membrane wherein the above cation exchange resin is filled in the pores of a porous membrane, the amount of cation exchange group including the amount of cation exchange group being in the form of ionic complex is 0.9 to 4.5 mols/g-dry mass and the cation exchange capacity is 0.4 to 1.5 mmol/g.

A typical example of the thus-produced membrane is a membrane in which a cation exchange resin obtained by random copolymerization, composed of 100 mols of a polymerizable monomer unit having an aromatic hydrocarbon group containing a cation exchange group, 10 to 99 mols of a polymerizable monomer unit having an anion exchange group containing primary to tertiary nitrogen atoms, and 5 to 22 mols of a crosslinkable polymerizable monomer unit is filled in the pores of a porous membrane; its cation exchange group amount is 0.9 to 4.5 mols/g-dry mass including the amount being in the form of ionic complex; and its cation exchange capacity is 0.4 to 1.5 mmol/g.

Incidentally, the amount of ionic complex formation, in the cation exchange membrane can be measured by the following method.

At first, the cation exchange membrane is subjected to elemental analysis to measure the amount of the element derived from the cation exchange group alone (the element is sulfur when the cation exchange group is, for example, sulfonic group). Then, from the measured amount of the element is calculated the total amount of cation exchange group in membrane (this amount includes the amount of cation exchange group being in the form of ionic complex). Thereafter, the cation exchange capacity of the cation exchange membrane is measured by a given method. The cation exchange group being in the form of ionic complex does not function as cation exchange group. Therefore, there is determined a difference between the calculated total amount of cation exchange group present in membrane and the amount of cation exchange group calculated from the actually measured cation exchange capacity, whereby the amount of cation exchange group being in the form of ionic complex can be determined.

Incidentally, in determining the total amount of cation exchange group in membrane, there is a case that all the elements constituting the cation exchange group to be measured are included in the matrix portion of the cation exchange resin constituting the membrane. In this case, on one characteristic element of the above common elements, there is measured the amount of that particular element contained in the matrix portion of the cation exchange resin, from the amount ratio of the polymerizable monomers used in production of membrane. Then, the amount of the particular element contained in the matrix portion is deducted from the amount of the element determined by the above elemental analysis, to determine the total amount of cation exchange group to be measured.

The membrane composed of the cation exchange membrane obtained by the above method satisfies well in the range of water content specified by the present invention.

Below is described a particularly preferred embodiment of the production of membrane by the above production method.

At first, there is prepared a polymerizable composition comprising polymerizable monomer components composed of 100 mols of a polymerizable monomer having an aromatic hydrocarbon group, 70 to 97 mols of a polymerizable monomer having an anion exchange group containing primary to tertiary nitrogen atoms, and 5 to 20 mols of a crosslinkable polymerizable monomer, and a polymerization initiator. This polymerizable composition is contacted with a porous membrane having an average pore diameter of 0.02 to 0.5 $\mu$m and a porosity of 30 to 70%, and then the same production conditions as mentioned above are employed to produce a cation exchange membrane.

In the cation exchange membrane produced, 20 to 80 mol % of the cation exchange group forms an ionic complex with the above-mentioned anion exchange group. In the cation exchange membrane, the amount of cation exchange group is 0.8 to 2.0 mols/g-dry mass including the amount of cation exchange group being in the form of ionic complex, and the cation exchange capacity is 0.5 to 1.0 mmol/g.

In the cation exchange membrane, the water content is 1 to 4% at a relative humidity of 20% RH (25˚C), 7 to 13% at a relative humidity of 80% RH (25˚C), and 21 to 35% at a relative humidity of 100% RH (25˚C). These water contents are particularly preferred in the present invention.

The membrane obtained by the second production method has an ionic complex composed of a cation exchange group and an anion exchange group of smaller amount. The presence of this ionic complex brings about unique properties regarding water contents, specified in the present invention. The reason thereof is considered to be as follows.

That is, formation of ionic complex by cation exchange group and anion exchange group increases the proportion of free water in the total water present in membrane and reduces the proportion of bound water. This matter is presumed to be related to the unique properties of the present membrane, regarding the water contents.

When the proportion of free water in membrane increases and the proportion of bound water decreases, the free water in membrane vaporizes easily not only in a dry environment of relative humidity of 20% RH (25˚C) but also in a relative humidity of 80%. As a result, the water remaining in membrane, mostly becomes bound water and the water contents of membrane are in low ranges satisfying the unique properties regarding water contents, specified in the present membrane.

In the second production method of membrane, the content of the crosslinkable polymerizable monomer in the polymerizable composition is relatively small. As a result, the covalent bonded crosslinking degree is small and the amount of ionic crosslink based on the formation of ionic complex is large. Ionic crosslink is a mild bond as compared with covalent bonded crosslink. Therefore, a membrane having a large amount of ionic crosslink swells in a wet state of relative humidity of 100% RH (25°C) (a state similar to contact with hydrous liquid fuel) and allow to absorb not only bound water but also free water sufficiently. As a result, high water contents of membrane, specified in the present invention can be achieved.

The individual polymerizable monomers used in the present production method are each preferably a radical polymerizable monomer whose polymerizable group is an ethylenically unsaturated group. A cation exchange resin obtained using radical polymerizable monomers has a structure in which side chains having a cation exchange group or an anion exchange group are bonded to a hydrocarbon main chain formed by the polymerization of the ethylenically unsaturated group. Each ion exchange group bonded to each side chain has a high structural freedom and, as compared with a case in which the main chain has ion exchange groups, can form an ionic complex far easily. For the above reason, the present membrane is high in formability of ionic complex.

Of the radical polymerizable monomers, monomers having a vinyl group are preferred. Specifically, polymerizable monomers (e.g. styrene) having a vinyl group directly bonding to the aromatic ring are preferred.

As the polymerizable monomer having an aromatic hydrocarbon group, known compounds can be used with no restriction. However, a styrene derivative is preferred because it hardly causes any undesirable chemical reaction (e.g. hydrolysis) in introduction of cation exchange group or in use of the obtained membrane as a fuel cell. Specific examples of the styrene derivative include styrene, methylstyrene, vinylxylene, $\alpha$-methylstyrene, vinylnaphthalene, chloromethylstyrene, bromobutylstyrene and $\alpha$-halogenated styrene.

As the polymerizable monomer having an anion exchange group containing primary to tertiary nitrogen atoms, there can be used, with no particular restriction, known compounds having an anion exchange group containing primary to tertiary nitrogen atoms. Styrene derivatives to which primary to tertiary amino groups are bonded, and nitrogen-containing hetero-cyclic monomers are preferred because they hardly cause any undesirable chemical reaction (e.g. hydrolysis) in introduction of cation exchange group or in use of the obtained membrane as a fuel cell. Specific examples of the monomer include amine monomers such as vinylbenzyldimethylamine, vinylbenzyl-diethylamine and the like; nitrogen-containing hetero-cyclic monomers such as vinylpyridine, vinylimidazole and the like; and their salts.

The content of the polymerizable monomer having an anion exchange group containing primary to tertiary nitrogen atoms, in the polymerizable composition is 10 to 99 mols relative to 100 mols of the polymerizable monomer having an aromatic hydrocarbon group. When the content of the polymerizable monomer having an anion exchange group is less than 10 mols, the amount of ionic complex formed is insufficient, making it impossible to obtain a cation exchange membrane showing the above-mentioned unique changes of water contents. When the content is more than 99 mols, the amount of the cation exchange group not in the form of ionic complex to the total cation exchange group introduced is small, making it impossible to obtain a sufficient cation exchange capacity.

Incidentally, the polymerizable monomer having an anion exchange group containing primary to tertiary nitrogen atoms is a liquid in may cases. However, the polymerizable monomer having a cation exchange group (e.g. sulfonic group) is a solid ordinarily. In order to impregnate this polymerizable monomer having a cation exchange group into a porous base material, a solvent is required for dissolution of the monomer therein. By using solvent, the monomer is diluted thereby. As a result, the density of the cation exchange resin filled in the pores of the porous base material is low or the density of cation exchange group is low, which is not preferred.

Even when the polymerizable monomer having a cation exchange group is a liquid, its mixing with an anion exchange group-containing polymerizable monomer (e.g. a polymerizable monomer containing primary to tertiary nitrogen atoms) causes immediate formation of an ionic complex, resulting in formation of a solid, in many cases. In this case as well, a solvent is required and the above problem occurs.

As the crosslinkable polymerizable monomer, there can be used any known crosslinking agent which is copolymerized with the above-mentioned individual polymerizable monomers and forms a crosslinked polymer. There can be mentioned, for example, divinyl compounds such as divinylbenzenes, divinylsulfone, butadiene, chloroprene, divinylbiphenyl, divinylnaphthalene, diallylamine, divinylpyridines and the like; and trivinylbenzenes.

The content of the crosslinkable polymerizable monomer in the polymerizable composition is 1 to 22 mols relative to 100 mols of the polymerizable monomer having an aromatic hydrocarbon group. When the content of the crosslinkable polymerizable monomer is less than 1 mol, the membrane obtained swells easily in methanol or water. Meanwhile, when the content of the crosslinkable polymerizable monomer is more tan 22 mols, the membrane obtained is low in water content at a 100% RH (25°C) and deviates from the range specified in the present invention.

As to the polymerization initiator, there is no particular restriction as long as it is a compound capable of polymerizing the above-mentioned polymerizable monomers; however, the polymerization initiator is preferably an organic peroxide. As the organic peroxide, there can be mentioned, for example, octanoyl peroxide, lauroyl peroxide, tert-butyl peroxy-2-ethylhexanoate, benzoyl peroxide, tert-butyl peroxyisobutyrate, tert-butyl peroxylaurate, tert-hexyl peroxybenzoate and di-tert-butyl peroxide.

The amount of the polymerization initiator compounded is generally 0.1 to 20 parts by mass, preferably 0.5 to 10 parts by mass relative to 100 parts by mass of the total of the polymerizable monomers.

The polymerizable composition comprises, as essential components, the above-mentioned polymerizable monomer having an aromatic hydrocarbon group, polymerizable monomer containing primary to tertiary nitrogen atoms, crosslinkable polymerizable monomer and polymerization initiator. The polymerizable composition may comprise as necessary other components for control of properties such as mechanical strength, polymerizability and the like, as long as the requirements regarding the water contents specified by the present invention are maintained. As other components, there can be mentioned, for example, polymerizable monomers such as acrylonitrile, acrolein, methyl vinyl ketone and the like; and plasticizers such as dibutyl phthalate, dioctyl phthalate, dimethyl isophthalate, dibutyl adipate, triethyl citrate, acetyl tributyl citrate, dibutyl sebacate and the like.

In the present production method, the polymerizable composition is contacted with a porous membrane to infiltrate the polymerizable composition into the pores of the porous membrane; then, the polymerizable composition infiltrated into the pores is polymerized and cured.

The porous membrane has pores having an average pore diameter of 0.01 to 2 $\mu$m, preferably 0.02 to 0.5 $\mu$m. At least part of the pores communicates with the two sides. The porosity of the porous membrane is 20 to 95%, preferably 30 to 70%.

When the average pore diameter of the porous membrane is less than 0.02 $\mu$m, the amount of the cation exchange resin filled in the pores of the porous membrane is insufficient and the membrane obtained is low in water content. As a result, the membrane is high electric resistance in a wet state. When the average pore diameter of the porous membrane is more than 0.5 $\mu$m, the membrane obtained is high in methanol permeability.

When the porosity is less than 20%, the amount of the cation exchange resin filled in the membrane is small as well and the requirements for water contents, specified by the present invention cannot be satisfied. When the porosity is more than 95%, the membrane obtained is insufficient in mechanical strength.

Incidentally, in the present invention, the average pore diameter of the porous membrane is a value obtained by the measurement by the half-dry method based on ASTM F 316-86. Also, the porosity of the porous membrane is a value obtained by measurement of volume (V cm$^3$) and mass (U g) of porous membrane and subsequent calculation using the following formula (in the following formula, X (g/cm$^3$) is the density of material of porous membrane).

$$\texttt{Porosity = [(V-U/X)/V]x100 (\%)}$$

In the porous membrane, the air permeability (JIS P 8117) is preferably 1,500 seconds or less, more preferably 1,000 seconds or less. With this air permeability range, the obtained membrane for fuel cell is low in electric resistance and yet maintains a high physical strength.

As the porous membrane, a known porous membrane can be used with no particular restriction as long as it satisfies the above-mentioned requirements for average pore diameter and porosity.

In general, the permeability (JIS P 8117) of porous membrane is preferably 1,500 seconds or less, more preferably 1,000 seconds or less. The thickness of porous membrane is preferably 10 to 120 $\mu$m, more preferably 10 to 70 $\mu$m. The surface smoothness of porous membrane is preferably 10 $\mu$m or less, more preferably 5 $\mu$m or less in terms of roughness index. A porous membrane having such a surface smoothness provides a membrane having a high methanol non-permeability.

As to the form of the porous membrane, there is no particular restriction. The form includes porous film, woven fabric, non-woven fabric, paper, inorganic membrane, etc. As the material for the porous membrane, there can be mentioned, for example, a thermoplastic resin composition, a thermosetting resin composition, an inorganic material, and a mixture thereof.

As the material for the porous membrane, a thermoplastic resin composition is preferred because it is easy to produce and has a high adhesion strength to the above-mentioned cation exchange resin. As the thermoplastic resin composition, there can be mentioned, for example, polyolefin resins such as homopolymer or copolymer of $\alpha$-olefin (e.g. ethylene, propylene, 1-butene, 1-pentene, 1-hexene, 3-methyl-1-butene, 4-methyl-1-pentene or 5-methyl-1-heptene) and the like; vinyl chloride resins such as polyvinyl chloride, vinyl chloride-vinyl acetate copolymer, vinyl chloride-vinylidene chloride copolymer, vinyl chloride-olefin copolymer and the like; fluoroplastics such as polytetrafluoroethylene, polychlorotrifluoroethylene, polyvinylidene fluoride, tetrafluoroethylene-hexafluoropropylene copolymer, tetrafluoroethylene-perfluoroalkyl vinyl ether copolymer, tetrafluoroethylene-ethylene copolymer and the like; and polyamide resins such as nylon 6, nylon 66 and the like. Of these, polyolefin resins are preferred as the material for porous membrane, because they are superior particularly in mechanical strength, chemical stability and chemical resistance and have high affinity with hydrocarbon-based ion exchange resin. Of the polyolefin resins, polyethylene resin or polypropylene resin is more preferred and polyethylene resin is most preferred.

The porous membrane is preferably a porous film made of a polyolefin resin because the above-mentioned average pore diameter is obtained easily, and is more preferably a porous film made of a polyethylene resin.

The porous film can be produced, for example, by the methods described in JP 1997-216964 A, JP 2002-338721 A, etc. Or, as the porous film, there can be obtained commercial products such as "Hipore" (Asahi Chemical Industry Co., Ltd.), "Upore" (Ube Industries, Ltd.), "Cetera" (Tonen Tapyrus Co., Ltd.), "Excepor" (Nitto Denko Corporation), "Hilet" (Mitsui Chemicals, Inc.) and the like.

As to the method for contact of the polymerizable composition with the porous membrane, there is no particular restriction as long as the polymerizable composition can be in infiltrated into the pores of the porous membrane. As the contact method, there can be mentioned, for example, a method of coating or spraying the polymerizable composition on the porous membrane, and a method of immersing the porous membrane in the polymerizable composition. In the case of the immersion method, the immersion time differs depending upon the kind of porous membrane and the formulation of polymerizable composition but is generally 0.1 second to ten and odds minutes.

As to the polymerization method, there is no particular restriction, and there can be appropriately employed a known method depending upon the polymerizable monomers and polymerization initiator used. When the above-mentioned organic peroxide is used as the polymerization initiator, a method by heating (thermal polymerization) is used generally. This method is preferred to other methods because the operation is easy and relatively homogeneous polymerization is made possible. The polymerization is preferably conducted in a state that the porous membrane has been covered with a film made of a polyester or the like, in order to prevent the polymerization inhibition by oxygen and allow the obtained membrane to have a smooth surface. By covering with a film, it can moreover remove the excessive portion of the polymerizable composition impregnated into the porous membrane, making it possible to produce a fuel cell membrane which is thin and uniform.

The polymerization temperature employed in the thermal polymerization is not restricted particularly, and a known condition may be selected appropriately. The polymerization temperature is generally about 50 to 150°C, preferably 60 to 120°C. The polymerization time is about 10 minutes to 10 hours.

The membrane-shaped material obtained by the polymerization is an anion exchange membrane in which a crosslinked resin having an anion exchange group containing primary to tertiary nitrogen atoms is filled in the pores of a porous membrane. The anion exchange group is derived from the polymerizable monomer containing primary to tertiary nitrogen atoms, used as a raw material.

The anion exchange membrane has an aromatic hydrocarbon group in an amount larger than the amount of the anion exchange group. To the aromatic hydrocarbon group is applied a treatment for introduction of cation exchange group, such as sulfonation or the like, by a given method. The cation exchange group is introduced almost quantitatively as mentioned above. As a result, there is obtained a membrane of the present invention having a cation exchange group (e.g. a sulfonic group) in an amount larger than the amount of an anion exchange group, in which a crosslinked cation exchange resin is filled in the pores of a porous membrane. In the crosslinked cation exchange resin constituting the present membrane, the anion exchange group derived from a polymerizable monomer containing primary to tertiary nitrogen atoms and the cation exchange group introduced are in the form of an ionic complex. The amount of the ionic complex corresponds to the above-mentioned amount of ionic complex.

A method for introducing a sulfonic group as the cation exchange group, the above-produced membrane-shaped material is sulfonated using a sulfonating agent such as concentrated sulfuric acid, fuming sulfuric acid, sulfur dioxide, chlorosulfonic acid or the like.

A method for introducing a phosphonic group as the cation exchange group, for example, the following method can be mentioned. At first, the above-mentioned membrane-shaped material is produced using, as the polymerizable monomer having an aromatic hydrocarbon group, a polymerizable monomer having a halogenated alkyl group, such as chloromethylstyrene, bromobutylstyrene or the like. Then, the membrane-shaped material is reacted with phosphorus trichloride in the presence of anhydrous aluminum chloride, followed by hydrolysis in an aqueous alkaline solution.

A method for introducing a carboxylic group as the cation exchange group, there is, for example, a method in which the membrane-shaped material is reacted with a halogen gas in the presence of a catalyst such as iron halide or the like, to halogenate the aromatic hydrocarbon group, is further reacted with an alkyl lithium, and then reacted with carbon dioxide.

Each of these methods for introducing a cation exchange group is per se a known method.

(Third Production Method of Membrane)

For producing a cation exchange membrane in which an ionic complex has been formed, there is a method other than the second production method of membrane.

The third production method of membrane is a method for producing a membrane of the present invention in which an ionic complex has been formed, which method comprises contacting an original cation exchange membrane comprizing a crosslinked cation exchange resin in the pores of a porous membrane, with a polymerizable monomer having an anion exchange group containing primary to tertiary nitrogen atoms, to impregnate the polymerizable monomer into the crosslinked cation exchange resin and then polymerizing the impregnated polymerizable monomer.

The amount of the polymerizable monomer having an anion exchange group containing primary to tertiary nitrogen atoms, impregnated into the original cation exchange membrane is 45 to 99 mol % of the cation exchange group possessed by the original cation exchange membrane, preferably 55 to 90 mol %.

In the present production method of membrane, the crosslinking degree and cation exchange capacity of the crosslinked cation exchange resin are selected in the relation mentioned in the second production method of membrane, whereby is obtained a membrane satisfying the particular requirements regarding water contents, specified in the present invention.

A typical example of the above membrane is a cation exchange membrane in which a crosslinked cation exchange resin obtained by random copolymerization, composed of 100 mols of a polymerizable monomer unit having an aromatic hydrocarbon group containing a cation exchange group and 5 to 22 mols of a crosslinkable, polymerizable monomer unit and an anion exchange resin composed of a polymerizable monomer unit having an anion exchange group containing primary to tertiary nitrogen atoms are filled in the pores of a porous membrane, the anion exchange resin being impregnated into the crosslinked cation exchange resin in such a proportion that the amount of anion exchange group becomes 45 to 99 mol % of the amount of cation exchange group, the cation exchange group amount is 0.9 to 4.5 mols/g-dry mass including the amount of the cation exchange group which is in the form of ionic complex, and the cation exchange capacity is 0.4 to 1.5 mmol/g.

The porous membrane, polymerizable monomers, polymerization initiator, etc. used in the third production method of membrane are the same as mentioned in the second production method of membrane; therefore, explanation thereof is not made.

Any cation exchange membrane obtained by the above-mentioned methods or other various methods is as necessary subjected to washing, cutting, etc. and used as a membrane for direct liquid fuel cell according to an usual method.

The membrane for direct liquid fuel cell, of the present invention is used suitably as a membrane for direct liquid fuel cell of type in which the air is taken in and supplied into an oxidant chamber with no substantial humidity control. This type of fuel cell is useful as an electric source for potable device requiring transferability, such as mobile phone or the like.

(Direct Liquid Fuel Cell)

The general basic structure of direct liquid fuel cell is shown in Fig. 1. Needless to say, the membrane of the present invention is also applicable to a direct liquid fuel cell having other known structure. The structure of a fuel cell of Fig. 1 was explained above; therefore, its explanation is not made.

In the fuel cell using the present membrane, the air surrounding the fuel cell is taken in and supplied into an oxidant chamber with no substantial humidity control. The way in which the air is taken in, may be natural diffusion or forced supply into an oxidant chamber using a pump or the like. In the case of a fuel cell in which the air surrounding the fuel cell is taken in by natural diffusion, the oxidant gas passage formed in the oxidant chamber of fuel cell communicates with the outside of fuel cell. The outside air is supplied into the oxidant chamber by diffusion, through the oxidant gas passage open to outside.

Here, no substantial humidity control refers to that very slight humidity change during air supply into oxidant chamber is allowed. For example, when the air is supplied into the oxidant chamber using a fan or the like, humidity change during air supply, which is significant in such an extent as to affect the electricity generation ability of cell, is not seen ordinarily. Even if, during air supply, there is a very slight humidity change (preferably about $\pm 5\%$, more preferably about $\pm 1\%$), such change is included in the range of water contents intended by the present invention.

The liquid fuel is methanol most generally and, with this liquid fuel, the effect of the present invention is exhibited most strikingly. A similar excellent effect is exhibited in fuels such as ethanol, ethylene glycol, dimethyl ether, hydrazine and the like. These fuels are ordinarily mixed with water.

[Examples]

The present invention is described below more specifically by way of Examples. However, the present invention is not restricted to these Examples.

In Examples and Comparative Examples, each membrane (each cation exchange membrane) was measured for cation exchange capacity, water contents, membrane resistance, methanol permeability and output voltage of fuel cell to evaluate the properties of the membrane. The methods for measurement of these properties are described below.

1) Cation exchange capacity and water contents

A membrane was immersed in an aqueous HCl (1 mol/L) solution for 10 hours or more to convert it into a hydrogen ion type. Then, the membrane was immersed in an aqueous NaCl (1 mol/L) solution to switch it to a sodium ion type. The hydrogen ion liberated was determined quantitatively with an aqueous sodium hydroxide solution, using a potentiometric titration apparatus (COMTITE-900, produced by Hiranuma Sangyo K.K.) (A mol).

Then, the same membrane was immersed in an aqueous HCl (1 mol/L) solution for 4 hours or more. The membrane was taken out and washed sufficiently with deionized water. The water adhering onto the surface of the membrane was removed by wiping off with a tissue, and the mass ($W_{100}$ g) of the membrane when wet was measured. This value was taken as hydrous mass of membrane at a relative humidity of 100% RH. After the measurement of $W_{100}$, the membrane was placed in a thermo-hygrostat set at a temperature of 25°C and a relative humidity of 80% RH. After being allowed to stand overnight, the mass of membrane was measured and the mass was taken as mass ($W_{80}$ g) at a relative humidity of RH 80%. Successively, a mass ($W_{20}$ g) was measured in the same manner except that the relative humidity was 20% RH. The membrane was vacuum-dried at 60°C for 5 hours and its mass was measured (D g).

Using the data obtained by the above measurements, the ion exchange capacity and water contents of the original cation exchange membrane were determined using the following formulas.

Ion exchange capacity = A x 1000/D (mmol/g-dry mass)

$$\text{Water content at relative humidity of 100\% RH}$$
$$= 100 \times (W_{100} - D)/D \ (\%)$$

$$\text{Water content at relative humidity of 80\% RH}$$
$$= 100 \times (W_{80} - D)/D \ (\%)$$

$$\text{Water content at relative humidity of 20\% RH}$$
$$= 100 \times (W_{20} - D)/D \ (\%)$$

2) Cation exchange group amount and anion exchange group amount

A membrane was immersed in an aqueous HCl (1 mol/L) solution for 10 hours or more. The membrane was taken out, washed sufficiently with deionized water, and vacuum-dried at 60°C for 5 hours. The resulting membrane was subjected to elemental analysis. Cation exchange group amount was calculated from the content of S obtained, and anion exchange group amount was calculated from the content of N obtained.

3) Amount of ionic complex formed in membrane

Ratio of conversion into ionic complex was calculated using the following formula, based on the cation exchange capacity obtained in 1) and the cation exchange group amount and anion exchange group amount obtained in 2).

$$\text{Ratio of conversion into ionic complex}$$
$$= 100 \times (\text{cation exchange group amount} - \text{cation}$$
$$\text{exchange capacity})/\text{cation exchange group}$$
$$\text{amount} \ (\%)$$

4) Membrane resistance

A platinum-made net as an electrode was contacted with each side of a membrane. The resulting membrane was incorporated into a fuel cell shown in Fig. 1. The temperature of the fuel cell was set at 25˚C. An aqueous 30 mass % methanol solution was supplied into the fuel chamber and a humidity-controlled air was supplied into the oxidant chamber at a flow rate of 200 ml/min using an air pump. The aqueous methanol solution and the air were passed through until an equilibrium was reached. Then, the resistance of the membrane was measured according to an AC two-terminal impedance method. The resistance obtained by the measurement includes the resistances of fuel cell and platinum net. A resistance when the membrane was removed from the cell, was measured, and it was taken as a blank. The blank was deducted from the resistance of membrane, and the resulting resistance was taken as membrane resistance.
In the measurement of resistance, the air whose relative humidity at 25˚C was controlled at 20% RH or 80% RH, was supplied into the oxidant chamber, and membrane resistance at such a relative humidity was measured.
The membrane resistance measured in a state that deionized water was filled in the oxidant chamber, was taken as a membrane resistance at a humidity 100%.

5) Methanol permeability

A membrane (membrane area: 1 $cm^2$) was placed between the cell partition walls 1a and 1b of a fuel cell shown in Fig. 1. Into the fuel chamber of this fuel cell was supplied an aqueous 30 mass % methanol solution using a pump for liquid chromatography. Into the oxidant chamber was supplied a humidity-controlled air at a flow rate of 300 ml/min. The measurement of methanol permeability was conducted in a thermostat of 25˚C. The air flowing from the outlet of oxidant chamber to the outside of cell was introduced into a gas sampler; a certain amount thereof was introduced directly into a gas chromatograph (GC 14B produced by Shimadzu Corporation), whereby the methanol concentration in air was measured. From this value, the amount of methanol which had passed through the membrane, was calculated. Incidentally, in the measurement of the amount of methanol which had passed through, a humidity-controlled air having a relative humidity of 20% or 80% at 25˚C was supplied into the oxidant chamber and methanol permeability was measured in this state.

6) Output voltage of fuel cell

A catalyst-dispersed solution was coated in an amount of 4 mg/$cm^2$ (the amount of alloy catalyst) on a carbon paper of 100 $\mu$m in thickness and 80% in porosity, which had been subjected to a water repellency treatment with a polytetrafluoroethylene. The resulting carbon paper was vacuum-dried at 80˚C for 4 hours to obtain a gas diffusion electrode. The catalyst-dispersed solution coated was prepared by mixing a carbon black loaded with a platinum-ruthenium alloy catalyst (ruthenium: 50 mol %) in an amount of 50 mass %, with a solution [Nafion (trade name) produced by Du Pont] obtained by dissolving 5% of perfluorocarbonsulfonic acid in alcohol and water.
Then, the gas diffusion electrode was set at the both surfaces of a fuel cell membrane to be tested. The resulting material was hot-pressed at an applied pressure of 5 MPa at 100˚C for 100 seconds and then allowed to stand at room temperature for 2 minutes. This material was integrated into a fuel cell having a structure shown in Fig. 1. The fuel cell was set at 25˚C; an aqueous 30 mass % methanol solution was supplied into the fuel chamber and an air of atmospheric pressure having a relative humidity of 80% RH was supplied into the oxidizer chamber at 200 ml/min; and an electricity generation test was conducted. The terminal voltages of the cell at current densities of 0 A/$cm^2$ and 0.1 A/$cm^2$ were measured.

Examples 1 to 5

Monomers, etc. were mixed according to each formulation shown in Table 1, to obtain polymerizable compositions. 400 g of each polymerizable composition was placed in a 500-ml glass vessel. Therein was immersed a porous membrane (made of a polyethylene having a weight-average molecular weight of 250,000; membrane thickness: 25 $\mu$m; average pore diameter: 0.03 $\mu$m; porosity: 37%).
Then, the porous membrane was taken out from the monomers composition and was covered at the two sides with a 100-$\mu$m polyester film used as a peeling material. The resulting material was subjected to thermal polymerization at 80˚C for 5 hours under a nitrogen pressure of 0.3 MPa.
The resulting membrane-shaped material was immersed in a mixture (1:1 mass resio) of 98% concentrated sulfuric acid and chlorosulfonic acid of 90% or higher purity at 40˚C for 60 minutes, for sulfonation of benzene ring, whereby were obtained membranes for fuel cell.
Each membrane for fuel cell was measured for cation exchange capacity, water content at each humidity, membrane resistance, membrane thickness, methanol permeability and output voltage of fuel cell. The results are shown in Tables 2 and 3.

Comparative Examples 1 and 2

An operation was conducted in the same manner as in Example 1 except that a monomers composition and a porous membrane both shown in Table 1 were used, to obtain membranes for fuel cell.
Each membrane for fuel cell was measured for cation exchange capacity, water contents, membrane resistance, membrane thickness, methanol permeability and output voltage of fuel cell. The results are shown in Tables 1 and 2.
Example 6
The cation exchange membrane produced in Comparative Example 1 was immersed at 25°C for 30 minutes in a composition composed of 5 mols of 4-vinylpyridine, 74 mols of styrene, 1 mol of divinylbenzene and 20 mols of pyridine. The cation exchange membrane was taken out and covered at the both sides with a 100-$\mu$m polyester film used as a peeling material. The resulting material was heated to 80°C and subjected to polymerization at 0.3 MPa for 5 hours. The resulting membrane was immersed for 12 hours in a water-methanol mixed solution (water: 50 mass %) containing 0.5 mol/L of sodium hydroxide.
The thus-produced membrane for fuel cell was measured for cation exchange capacity, water content at each humidity, membrane resistance, membrane thickness, methanol permeability and output voltage of fuel cell. The results are shown in Tables 2 and 3.

Table 1

| | Formulation of polymerizable monomers (mols) | | | | Addition amount of polymerization initiator PO[5] (mass parts[6]) |
|---|---|---|---|---|---|
| | St[1] | 4VP[2] | VCH[3] | DVB[4] | |
| Ex. 1 | 100 | | 650 | 0.9 | 5 |
| Ex. 2 | 100 | 89 | | 6 | 5 |
| Ex. 3 | 100 | 96 | | 6 | 5 |
| Ex. 4 | 100 | 96 | | 10 | 5 |
| Ex. 5 | 100 | 82 | | 20 | 5 |
| Comp. Ex. 1 | 100 | | | 11 | 5 |
| Comp. Ex. 2 | 100 | | | 43 | 5 |

1) St: styrene
2) 4VP: 4-vinylpyridine
3) VCH: vinylcyclohexane
4) DVB: divinylbenzene
5) PO: tert-butyl peroxyethylhexanoate
6) Mass relative to 100 mass parts of total monomers

Table 2

| | Cation exchange capacity (mmol/g-dry membrane) | Cation exchange group amount (mmol/g-dry membrane) | Anion exchange group amount (mmol/g-dry membrane) | Ratio of conversion of cation exchange group into ionic complex (%) | Water content at each relative humidity (25°C) (%) | | | Membrane thickness ($\mu$m) |
|---|---|---|---|---|---|---|---|---|
| | | | | | 20% RH | 80% RH | 100% RH | |
| Ex. 1 | 0.25 | 0.25 | 0 | 0 | 4 | 15 | 20 | 26 |
| Ex. 2 | 0.65 | 1.6 | 1.4 | 59 | 4 | 13 | 27 | 28 |
| Ex. 3 | 0.45 | 1.5 | 1.45 | 70 | 3 | 12 | 25 | 28 |
| Ex. 4 | 0.50 | 1.5 | 1.45 | 67 | 2 | 10 | 24 | 27 |

(continued)

| | Cation exchange capacity (mmol/g-dry membrane) | Cation exchange group amount (mmol/g-dry membrane) | Anion exchange group amount (mmol/g-dry membrane) | Ratio of conversion of cation exchange group into ionic complex (%) | Water content at each relative humidity (25°C) (%) | | | Membrane thickness (μm) |
|---|---|---|---|---|---|---|---|---|
| | | | | | 20% RH | 80% RH | 100% RH | |
| Ex. 5 | 0.82 | 1.6 | 1.2 | 49 | 3 | 11 | 23 | 27 |
| Ex. 6 | 1.4 | 2.2 | 1.0 | 36 | 2 | 10 | 21 | 27 |
| Com. Ex. 1 | 2.4 | 2.4 | 0 | 0 | 6 | 20 | 30 | 31 |
| Comp. Ex. 2 | 1.6 | 1.6 | 0 | 0 | 3 | 6 | 10 | 26 |

Table 3

| | Membrane resistance at each relative humidity (25°C) ($\Omega \cdot cm^2$) | | | Methanol permeability at each relative humidity (25°C) (g/m²·hr) | | Output voltage of fuel cell (V) | |
|---|---|---|---|---|---|---|---|
| | 20% RH | 80% RH | 100% RH | 20% RH | 80% RH | 0 A/cm² | 0.1 A/cm² |
| Ex. 1 | 0.25 | 0.21 | 0.20 | 57 | 420 | 0.65 | 0.34 |
| Ex. 2 | 0.17 | 0.14 | 0.13 | 57 | 290 | 0.74 | 0.39 |
| Ex. 3 | 0.18 | 0.15 | 0.14 | 48 | 240 | 0.78 | 0.40 |
| Ex. 4 | 0.20 | 0.16 | 0.15 | 40 | 170 | 0.83 | 0.43 |
| Ex. 5 | 0.16 | 0.13 | 0.12 | 48 | 200 | 0.81 | 0.42 |
| Ex. 6 | 0.20 | 0.19 | 0.18 | 30 | 150 | 0.87 | 0.41 |
| Com. Ex. 1 | 0.07 | 0.05 | 0.05 | 82 | 1000 | 0.55 | 0.30 |
| Comp. Ex. 2 | 0.39 | 0.32 | 0.30 | 48 | 300 | 0.71 | 0.20 |

**Claims**

1. A membrane for direct liquid fuel cell of type in which the air is taken in and supplied into an oxidant chamber with no substantial humidity control, which membrane is **characterized by** being composed of a cation exchange membrane having a water content of 1 to 5% at a relative humidity of 20% RH (25°C), a water content of 5 to 15% at a relative humidity of 80% RH (25°C) and a water content of 20 to 40% at a relative humidity of 100% RH (25°C).

2. The membrane for direct liquid fuel cell according to Claim 1, wherein the cation exchange membrane is a cation exchange membrane in which a crosslinked cation exchange resin membrane obtained by random copolymerization, composed of
100 mols of a polymerizable monomer unit having a cation exchange group,
0.1 to 1 mol of a crosslinkable polymerizable monomer unit and
600 to 900 mols of a polymerizable monomer unit having no cation exchange group
is filled in the pores of a porous membrane, and the cation exchange capacity is 0.1 to 0.3 mmol/g.

3. The membrane for direct liquid fuel cell according to Claim 1, wherein the cation exchange membrane is a cation exchange membrane in which a cation exchange resin is filled in the pores of a porous membrane, the cation exchange group amount is 0.9 to 4.5 mols/g-dry mass including the amount of the cation exchange group which is in the form of ionic complex, and the cation exchange capacity is 0.4 to 1.5 mmol/g.

4. The membrane for direct liquid fuel cell according to Claim 1, wherein the cation exchange membrane is a cation exchange membrane in which a cation exchange resin obtained by random copolymerization, composed of
   100 mols of a polymerizable monomer unit having an aromatic hydrocarbon group containing a cation exchange group,
   10 to 99 mols of a polymerizable monomer unit having an anion exchange group containing primary to tertiary nitrogen atoms, and
   5 to 22 mols of a crosslinkable, polymerizable monomer unit
   is filled in the pores of a porous membrane, the cation exchange group amount is 0.9 to 4.5 mols/g-dry mass including the amount of the cation exchange group which is in the form of ionic complex, and the cation exchange capacity is 0.4 to 1.5 mmol/g.

5. The membrane for direct liquid fuel cell according to Claim 1, wherein the cation exchange membrane is a cation exchange membrane in which a crosslinked cation exchange resin obtained by random copolymerization, composed of
   100 mols of a polymerizable monomer unit having an aromatic hydrocarbon group containing a cation exchange group and 5 to 22 mols of a crosslinkable, polymerizable monomer unit
   and an anion exchange resin composed of a polymerizable monomer unit having an anion exchange group containing primary to tertiary nitrogen atoms
   are filled in the pores of a porous membrane, the anion exchange resin being impregnated into the crosslinked cation exchange resin in such a proportion that the amount of anion exchange group becomes 45 to 99 mol % of the amount of cation exchange group, the cation exchange group amount is 0.9 to 4.5 mols/g-dry mass including the amount of the cation exchange group which is in the form of ionic complex, and the cation exchange capacity is 0.4 to 1.5 mmol/g.

6. A direct liquid fuel cell produced using a membrane for direct liquid fuel cell set forth any one of Claims 1 to 5.

7. A direct liquid fuel cell comprising:

   a fuel chamber partition wall having a fuel chamber,
   an oxidant chamber partition wall having an oxidant chamber, and
   a membrane for direct liquid fuel cell set forth any one of Claims 1 to 5, which is interposed between the two partition walls, separates the fuel chamber from the oxidant chamber, and has a gas diffusion electrode on each side, wherein the oxidant gas passage formed in the oxidant chamber communicates with the outside of the cell.

Fig. 1

Fig. 2

**INTERNATIONAL SEARCH REPORT**

| | International application No. |
|---|---|
| | PCT/JP2007/054977 |

A.  CLASSIFICATION OF SUBJECT MATTER
*H01M8/02*(2006.01)i, *H01B1/06*(2006.01)i, *H01M8/10*(2006.01)i

According to International Patent Classification (IPC) or to both national classification and IPC

B.  FIELDS SEARCHED

Minimum documentation searched (classification system followed by classification symbols)
H01M8/02, H01B1/06, H01M8/10

Documentation searched other than minimum documentation to the extent that such documents are included in the fields searched
Jitsuyo Shinan Koho          1922-1996   Jitsuyo Shinan Toroku Koho    1996-2007
Kokai Jitsuyo Shinan Koho    1971-2007   Toroku Jitsuyo Shinan Koho    1994-2007

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y<br>A | JP 2004-206885 A  (TDK Corp.),<br>22 July, 2004 (22.07.04),<br>Claims; Par. No. [0021]<br>(Family: none) | 1-3,5-7<br>4 |
| Y<br>A | JP 2006-4784 A  (Konica Minolta Holdings, Inc.),<br>05 January, 2006 (05.01.06),<br>Claims; Par. No. [0060]<br>(Family: none) | 1-3,5-7<br>4 |
| Y<br>A | JP 2005-78870 A  (Sony Corp.),<br>24 March, 2005 (24.03.05),<br>Claims; Par. No. [0015]<br>(Family: none) | 1-3,5-7<br>4 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    23 April, 2007 (23.04.07) | Date of mailing of the international search report<br>    01 May, 2007 (01.05.07) |
|---|---|
| Name and mailing address of the ISA/<br>    Japanese Patent Office | Authorized officer |
| Facsimile No. | Telephone No. |

Form PCT/ISA/210 (second sheet) (April 2005)

**EP 1 995 807 A1**

INTERNATIONAL SEARCH REPORT

International application No.

PCT/JP2007/054977

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2001-114834 A (UNI-CHEMICAL CO., LTD.),<br>24 April, 2001 (24.04.01),<br>Claims; Par. No. [0001]; Fig. 4<br>(Family: none) | 1-3,5-7<br>4 |
| Y<br>A | JP 2005-194304 A (UNI-CHEMICAL CO., LTD.),<br>21 July, 2005 (21.07.05),<br>Claims; Par. No. [0001]; Figs. 2, 6<br>(Family: none) | 1-3,5-7<br>4 |
| Y | JP 2005-5171 A (Tokuyama Corp.),<br>06 January, 2005 (06.01.05),<br>Claims; Par. No. [0016]<br>(Family: none) | 2,5 |
| Y | JP 2004-171994 A (Ube Industries, Ltd.),<br>17 June, 2004 (17.06.04),<br>Claims<br>(Family: none) | 2,5 |
| Y | JP 2001-135328 A (Tokuyama Corp.),<br>18 May, 2001 (18.05.01),<br>Claims; Par. No. [0023]<br>(Family: none) | 2-3,5 |
| Y | JP 2004-158270 A (Nitto Denko Corp.),<br>03 June, 2004 (03.06.04),<br>Claims; Par. No. [0024]<br>(Family: none) | 2-3,5 |
| Y | JP 2003-261697 A (Japan Atomic Energy Research Institute),<br>19 September, 2003 (19.09.03),<br>Claims; Par. No. [0044]<br>(Family: none) | 2-3,5 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001135328 A
- JP 11310649 A
- JP 2005005171 A
- JP 9216964 A
- JP 2002338721 A

### Non-patent literature cited in the description

- *The society of Chemical Engineers,* 2005, vol. 31 (1), 62-67